# EUROPEAN PATENT APPLICATION

(11) **EP 4 687 011 A1**
(43) Date of publication of application: **04.02.2026**
(21) Application number: 25188539.8
(22) Date of filing: 09.07.2025
(51) Int. Cl.: G06F 3/01, B60K 35/20, B60K 35/22, G06F 3/04886

(54) **SYSTEMS, APPARATUSES, METHODS, AND COMPUTER PROGRAM PRODUCTS FOR A STABILIZED VEHICLE RELATED INTERFACE COMPONENT**

(30) Priority: 31.07.2024 IN 202411057947; 21.10.2024 US 202418921880
(71) Applicant: Honeywell International Inc., Charlotte, NC 28202 (US)
(72) Inventor: LEIPHON, Kenneth M., Charlotte, 28202 (US); J, Kirupakar, Charlotte, 28202 (US); KHAN, Kalimulla, Charlotte, 28202 (US); RAJENDRAN, Ramkumar, Charlotte, 28202 (US)
(74) Representative: Haseltine Lake Kempner LLP

(57) **Abstract**

Systems, apparatuses, methods, and computer program products are provided herein. For example, a method may include receiving, from a wearable device, head motion data. In some embodiments, the method includes generating eye motion data by applying the head motion data to an eye motion determination model. In some embodiments, the method includes detecting device motion data associated with a device. In some embodiments, the method includes generating vehicle related stabilization data by applying the eye motion data and the device motion data to a vehicle related stabilization model. In some embodiments, the method includes generating a stabilized vehicle related interface component based on the vehicle related stabilization data and vehicle related device display data. In some embodiments, the method includes causing the stabilized vehicle related interface component to be rendered to an interface of the device.

## Description

### CROSS REFERENCE TO RELATED APPLICATIONS

This application claims the benefit of U.S. Provisional Patent Application No. 63/593,860, filed October 27, 2023 and India Provisional Patent Application No. 202411057947, filed July 31, 2024, the entire contents of which are incorporated by reference herein.

### TECHNOLOGICAL FIELD

Embodiments of the present disclosure relate generally to systems, apparatuses, methods, and computer program products for a stabilized vehicle related interface component.

### BACKGROUND

Applicant has identified many technical challenges and difficulties associated with an unstable vehicle related interface components. Through applied effort, ingenuity, and innovation, Applicant has solved problems related to unstable vehicle related interface components by developing solutions embodied in the present disclosure, which are described in detail below.

### BRIEF SUMMARY

Various embodiments described herein relate to systems, apparatuses, methods, and computer program products for a stabilized vehicle related interface component.

In accordance with one aspect of the disclosure, a method is provided. In some embodiments, the method includes receiving, from a wearable device, head motion data. In some embodiments, the wearable device is in contact with an occupant of a vehicle. In some embodiments, the method includes generating eye motion data by applying the head motion data to an eye motion determination model. In some embodiments, the method includes detecting device motion data associated with a device. In some embodiments, the method includes generating vehicle related stabilization data by applying the eye motion data and the device motion data to a vehicle related stabilization model. In some embodiments, the method includes generating a stabilized vehicle related interface component based on the vehicle related stabilization data and vehicle related device display data. In some embodiments, the method includes causing the stabilized vehicle related interface component to be rendered to an interface of the device.

In some embodiments, the head motion data is received when the vehicle is in motion.

In some embodiments, the method includes remapping one or more touch zones based on the eye motion data and the device motion data.

In some embodiments, the device is an onboard vehicle device.

In some embodiments, the onboard vehicle device is physically secured to the vehicle.

In some embodiments, the device is a mobile device.

In some embodiments, the wearable device is in contact with at least a portion of a head of the occupant.

In some embodiments, the wearable device is at least one of glasses, headphones, or a head mounted display.

In some embodiments, the method includes identifying the vehicle related device display data.

In some embodiments, the method includes generating a vehicle related interface component based on the vehicle related device display data.

In some embodiments, the method includes causing the vehicle related interface component to be rendered to the interface of the device.

In some embodiments, the head motion data is received from the wearable device in response to an occupant instability action or a vehicle instability event.

In some embodiments, the stabilized vehicle related interface component comprises one or more stabilized vehicle related device display items.

In some embodiments, the eye motion determination model comprises a vestibulo-ocular reflex model.

In accordance with another aspect of the disclosure, an apparatus is provided. In some embodiments, the apparatus includes memory and one or more processors communicatively coupled to the memory. In some embodiments, the one or more processors are configured to receive, from a wearable device, head motion data. In some embodiments, the wearable device is in contact with an occupant of a vehicle. In some embodiments, the one or more processors are configured to generate eye motion data by applying the head motion data to an eye motion determination model. In some embodiments, the one or more processors are configured to detect device motion data associated with a device. In some embodiments, the one or more processors are configured to generate vehicle related stabilization data by applying the eye motion data and the device motion data to a vehicle related stabilization model. In some embodiments, the one or more processors are configured to generate a stabilized vehicle related interface component based on the vehicle related stabilization data and vehicle related device display data. In some embodiments, the one or more processors are configured to cause the stabilized vehicle related interface component to be rendered to an interface of the device.

In some embodiments, the head motion data is received when the vehicle is in motion.

In some embodiments, the one or more processors are configured to remapping one or more touch zones based on the eye motion data and the device motion data.

In some embodiments, the device is an onboard vehicle device or a mobile device.

In some embodiments, the wearable device is in contact with at least a portion of a head of the occupant.

In some embodiments, the wearable device is at least one of glasses, headphones, or a head mounted display.

In some embodiments, the head motion data is received from the wearable device in response to an occupant instability action or a vehicle instability event.

In accordance with another aspect of the disclosure, a computer program product is provided. In some embodiments, the computer program product includes at least one non-transitory computer-readable storage medium having computer program code stored thereon. In some embodiments, the computer program code, in execution with at least one processor, configures the computer program product for receiving, from a wearable device, head motion data. In some embodiments, the wearable device is in contact with an occupant of a vehicle. In some embodiments, the computer program code, in execution with at least one processor, configures the computer program product for generating eye motion data by applying the head motion data to an eye motion determination model. In some embodiments, the computer program code, in execution with at least one processor, configures the computer program product for detecting device motion data associated with a device. In some embodiments, the computer program code, in execution with at least one processor, configures the computer program product for generating vehicle related stabilization data by applying the eye motion data and the device motion data to a vehicle related stabilization model. In some embodiments, the computer program code, in execution with at least one processor, configures the computer program product for generating a stabilized vehicle related interface component based on the vehicle related stabilization data and vehicle related device display data. In some embodiments, the computer program code, in execution with at least one processor, configures the computer program product for causing the stabilized vehicle related interface component to be rendered to an interface of the device.

The above summary is provided merely for purposes of summarizing some example embodiments to provide a basic understanding of some aspects of the present disclosure. Accordingly, it will be appreciated that the above-described embodiments are merely examples and should not be construed to narrow the scope or spirit of the disclosure in any way. It will be appreciated that the scope of the present disclosure encompasses many potential embodiments in addition to those here summarized, some of which will be further described below.

### BRIEF DESCRIPTION OF THE DRAWINGS

Reference will now be made to the accompanying drawings. The components illustrated in the figures may or may not be present in certain embodiments described herein. Some embodiments may include fewer (or more) components than those shown in the figures in accordance with an example embodiment of the present disclosure.
FIG. 1 illustrates an example block diagram of an environment in which embodiments of the present disclosure may operate;
FIG. 2 illustrates an example block diagram of an example apparatus that may be specially configured in accordance with one or more embodiments of the present disclosure;
FIG. 3 illustrates an example interface component in accordance with one or more embodiments of the present disclosure;
FIG. 4 illustrates an example interface component in accordance with one or more embodiments of the present disclosure;
FIG. 5 illustrates a flowchart of an example method in accordance with one or more embodiments of the present disclosure; and
FIG. 6 illustrates a flowchart of an example method in accordance with one or more embodiments of the present disclosure.

### DETAILED DESCRIPTION

Some embodiments of the present disclosure will now be described more fully herein with reference to the accompanying drawings, in which some, but not all, embodiments of the disclosure are shown. Indeed, various embodiments of the disclosure may be embodied in many different forms and should not be construed as limited to the embodiments set forth herein; rather, these embodiments are provided so that this disclosure will satisfy applicable legal requirements. Like reference numerals refer to like elements throughout.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in one embodiment," "according to one embodiment," "in some embodiments," and the like generally mean that the particular feature, structure, or characteristic following the phrase may be included in at least one embodiment of the present disclosure and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments, or it may be excluded.

The use of the term "circuitry" as used herein with respect to components of a system, or an apparatus should be understood to include particular hardware configured to perform the functions associated with the particular circuitry as described herein. The term "circuitry" should be understood broadly to include hardware and, in some embodiments, software for configuring the hardware. For example, in some embodiments, "circuitry" may include processing circuitry, communication circuitry, input/output circuitry, and the like. In some embodiments, other elements may provide or supplement the functionality of particular circuitry. Alternatively, or additionally, in some embodiments, other elements of a system and/or apparatus described herein may provide or supplement the functionality of another particular set of circuitry. For example, a processor may provide processing functionality to any of the sets of circuitry, a memory may provide storage functionality to any of the sets of circuitry, communications circuitry may provide network interface functionality to any of the sets of circuitry, and/or the like.

### Overview

Example embodiments disclosed herein address technical problems associated with unstable vehicle related interface components. As would be understood by one skilled in the field to which this disclosure pertains, there are numerous example scenarios in which vehicle related interface components are desirable.

In many applications, it may be desirable to use vehicle related interface components. For example, it may be desirable to use vehicle related interface components associated with an onboard vehicle device (e.g., a device that is a component of the vehicle). As another example, it may be desirable to use vehicle related interface components associated with a mobile device (e.g., a personal device of an occupant in a vehicle). In some implementations, it may be desirable to use vehicle related interface components to facilitate traveling from a first location to a second location using the vehicle (e.g., use vehicle related interface components when the vehicle is in motion).

In some implementations, vehicle related interface components may be impacted by an occupant instability action and/or a vehicle instability event. In some implementations, an occupant instability action and/or a vehicle instability event may decrease the usefulness of vehicle related interface components because occupant instability actions and/or a vehicle instability events may cause such vehicle related interface components become unstable (e.g., a vehicle related interface component may shake and/or blur). For example, an occupant instability action and/or a vehicle instability event may cause vehicle related interface components to become unstable such that information displayed on the vehicle related interface component is not readable by an occupant of a vehicle (e.g., an operator of a vehicle, a passenger of a vehicle, etc.). As another example, an occupant instability action and/or a vehicle instability event may cause vehicle related interface components to become unstable such that occupants of a vehicle are unable to use vehicle related interface components while the vehicle is in motion (e.g., to facilitate traveling from a first location to a second location using the vehicle). As another example, an occupant instability action and/or a vehicle instability event may cause vehicle related interface components to become unstable such that occupants of the vehicle are affected by motion sickness (e.g., due to the shaking and/or blurriness of the vehicle related interface components). Accordingly, there is a need for systems, apparatuses, methods, and computer program products for generating a stabilized vehicle related interface component even when vehicle related interface components are impacted by an occupant instability action and/or a vehicle instability event.

Thus, to address these and/or other issues related to vehicle related interface components, example systems, apparatuses, methods, and computer program products for generating a stabilized vehicle related interface component are disclosed herein. For example, an embodiment in this disclosure, described in greater detail below, includes a method that includes receiving, from a wearable device, head motion data. In some embodiments, the wearable device is in contact with an occupant of a vehicle. In some embodiments, the method includes generating eye motion data by applying the head motion data to an eye motion determination model. In some embodiments, the method includes detecting device motion data associated with a device. In some embodiments, the method includes generating vehicle related stabilization data by applying the eye motion data and the device motion data to a vehicle related stabilization model. In some embodiments, the method includes generating a stabilized vehicle related interface component based on the vehicle related stabilization data and vehicle related device display data. In some embodiments, the method includes causing the stabilized vehicle related interface component to be rendered to an interface of the device. Accordingly, the systems, apparatuses, methods, and computer program products for a stabilized vehicle related interface component provided herein enable a stabilized vehicle related interface component even when vehicle related interface components are impacted by occupant instability action and/or a vehicle instability event.

### Example Systems and Apparatuses

Embodiments of the present disclosure herein include systems, apparatuses, methods, and computer program products configured for display stabilization. It should be readily appreciated that the embodiments of the apparatus, systems, methods, and computer program product described herein may be configured in various additional and alternative manners in addition to those expressly described herein.

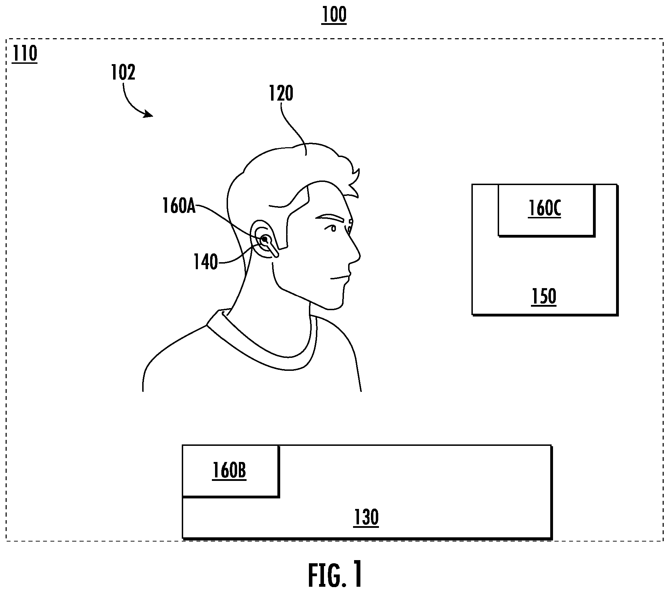

FIG. 1 illustrates an example block diagram of an environment 100 in which embodiments of the present disclosure may operate. Specifically, FIG. 1 illustrates a vehicle 110. In some embodiments, the vehicle 110 may describe any machine, robot, computing devices, and/or apparatus comprised of hardware, software, firmware, and/or any combination thereof, that maneuvers throughout an environment through any medium. In some contexts, a vehicle is utilized to transport objects, entities (e.g., people, animals, or other beings), or other onboard cargo. In some situations, a vehicle may be transporting no object except for the vehicle itself. Vehicles may be used for transportation on land, in water, in air, or across any other medium. Examples of vehicles include airplanes, helicopters, drones, cars, trucks, submarines, boats, and/or the like. Vehicles are not limited to the examples listed herein and may include any type of transportation device.

In some embodiments, the vehicle 110 is associated with a determinable location. The determinable location of the vehicle 110 in some embodiments represents an absolute position (e.g., GPS coordinates, latitude and longitude locations, an address, and/or the like) or a relative position of the vehicle 110 (e.g., an identifier representing the location of the vehicle 110 as compared to one or more other vehicles, one or more buildings (e.g., a destination of the vehicle 110), an enterprise headquarters, or general description in the world for example based at least in part on continent, state, ocean, or other definable region). In some embodiments, the vehicle 110 includes or otherwise is associated with a location sensor and/or software-driven location services that provide the location data corresponding to the vehicle 110. In other embodiments, the location of the vehicle 110 is stored and/or otherwise determinable to one or more systems.

In some embodiments, the environment 100 includes an occupant 102. In some embodiments, the occupant 102 is located in the vehicle 110 (e.g., the occupant 102 is an occupant of the vehicle 110). In some embodiments, the occupant 102 is an operator of the vehicle 110. For example, the occupant 102 may be a pilot, driver, and/or the like of the vehicle 110. In some embodiments, the occupant 102 is a passenger of the vehicle 110 (e.g., an occupant of the vehicle 110 that is not an operator of the vehicle 110). In some embodiments, the occupant 102 is in the vehicle 110 when the vehicle 110 is in motion. For example, the occupant 102 may be in the vehicle 110 is traveling from a first location to a second location.

In some embodiments, the environment 100 includes a wearable device 140. In some embodiments, the wearable device 140 includes glasses. For example, the wearable device 140 may be a pair of smart glasses. In some embodiments, the wearable device 140 includes headphones. For example, the wearable device 140 may be a pair of over the ear headphones. As another example, the wearable device 140 may be a pair of earbuds. In some embodiments, the wearable device 140 includes a head mounted display. For example, the wearable device may include a wearable device that is configured to provide real-world images, virtual reality images, augmented reality images, mixed reality images, and/or the like to the occupant 102. In some embodiments, the wearable device is in contact with the occupant 102. In some embodiments, the wearable device 140 is in contact with at least a portion of a head of the occupant 102.

In some embodiments, the wearable device 140 includes a wearable device sensing component 160A. In some embodiments, the wearable device sensing component 160A is disposed within the wearable device 140. In some embodiments, the wearable device sensing component 160A is configured to capture data associated with the occupant 102. In some embodiments, the wearable device sensing component 160A is configured to capture head motion data associated with the occupant 102. In this regard, for example, the wearable device sensing component 160A includes at least one lidar component configured to capture head motion data and/or other data associated with the occupant 102. As another example, the wearable device sensing component 160A includes at least one inertial measurement unit configured to capture head motion data and/or other data associated with the occupant 102. As another example, the wearable device sensing component 160A includes at least one accelerometer configured to capture head motion data and/or other data associated with the occupant 102. As another example, the wearable device sensing component 160A includes at least one gyroscope configured to capture head motion data and/or other data associated with the occupant 102. As another example, the wearable device sensing component 160A includes at least one radar component (e.g., a millimeter wave-based radar component) configured to capture head motion data and/or other data associated with the occupant 102. As another example, the wearable device sensing component 160A includes at least one global positioning system (GPS) component configured to capture head motion data and/or other data associated with the occupant 102. As another example, the wearable device sensing component 160A includes at least one camera configured to capture head motion data and/or other data associated with the occupant 102

In some embodiments, the environment 100 includes an onboard vehicle device 130. In some embodiments, the onboard vehicle device 130 is electronically and/or communicatively coupled to the vehicle 110, a mobile device 150, and/or the wearable device 140. The onboard vehicle device 130 may be located within the vehicle 110. In some embodiments, the onboard vehicle device 130 is physically secured to the vehicle 110. For example, the onboard vehicle device 130 may be a component of the vehicle 110, such as a central console display. In some embodiments, the onboard vehicle device 130 is configured to provide information associated with the vehicle 110 to the occupant 102. For example, the onboard vehicle device 130 may be configured to provide a speed of the vehicle 110 to the occupant 102. Additionally, or alternatively, the onboard vehicle device 130 is configured to provide the occupant 102 with information associated with the occupant 102. In some embodiments, the onboard vehicle device 130 is configured via hardware, software, firmware, and/or a combination thereof, to perform data intake of one or more types of data, such as head motion data, eye motion data, device motion data, vehicle related device display data, and/or the like.

Additionally, or alternatively, in some embodiments, the onboard vehicle device 130 is configured via hardware, software, firmware, and/or a combination thereof, to generate and/or transmit command(s) that control, adjust, or otherwise impact operations of one or more of the vehicle 110, the onboard vehicle device 130, the mobile device 150, and/or the wearable device 140. For example, the onboard vehicle device 130 may be configured to generate a stabilized vehicle related interface component. Additionally, or alternatively, in some embodiments, the onboard vehicle device 130 is configured via hardware, software, firmware, and/or a combination thereof, to perform data reporting, provide data, and/or other data output process(es) associated with monitoring or otherwise analyzing operations of one or more of the vehicle 110, the onboard vehicle device 130, the mobile device 150, and/or the wearable device 140. For example, in various embodiments, the onboard vehicle device 130 may be configured to execute and/or perform one or more operations and/or functions described herein.

In some embodiments, the onboard vehicle device 130 includes an onboard vehicle device sensing component 160B. In some embodiments, the onboard vehicle device sensing component 160B is disposed within the onboard vehicle device 130. In some embodiments, the onboard vehicle device sensing component 160B is configured to capture data associated with the onboard vehicle device 130. In some embodiments, the onboard vehicle device sensing component 160B is configured to capture device motion data associated with the onboard vehicle device 130. In this regard, for example, the onboard vehicle device sensing component 160B includes at least one lidar component configured to capture device motion data and/or other data associated with the onboard vehicle device 130. As another example, the onboard vehicle device sensing component 160B includes at least one inertial measurement unit configured to capture device motion data and/or other data associated with the onboard vehicle device 130. As another example, the onboard vehicle device sensing component 160B includes at least one accelerometer configured to capture device motion data and/or other data associated with the onboard vehicle device 130. As another example, the onboard vehicle device sensing component 160B includes at least one gyroscope configured to capture device motion data and/or other data associated with the onboard vehicle device 130. As another example, the onboard vehicle device sensing component 160B includes at least one radar component (e.g., a millimeter wave-based radar component) configured to capture device motion data and/or other data associated with the onboard vehicle device 130. As another example, the onboard vehicle device sensing component 160B includes at least one global positioning system (GPS) component configured to capture device motion data and/or other data associated with the onboard vehicle device 130. As another example, the onboard vehicle device sensing component 160B includes at least one camera configured to capture device motion data and/or other data associated with the onboard vehicle device 130.

In some embodiments, the environment 100 includes the mobile device 150. In some embodiments, the mobile device 150 is electronically and/or communicatively coupled to the vehicle 110, the onboard vehicle device 130, and/or the wearable device 140. The mobile device 150 may be located within the vehicle 110. In some embodiments, the mobile device 150 is mobile and may be removed from the vehicle 110. In some embodiments, the mobile device 150 is associated with the occupant 102. For example, the mobile device 150 may be a personal device of the occupant 102. In some embodiments, the mobile device 150 is not physically secured to the vehicle 110. In some embodiments, the mobile device 150 is configured to provide information associated with the vehicle 110 to the occupant 102. Additionally, or alternatively, the mobile device 150 is configured to provide the occupant 102 with information associated with the occupant 102. For example, the mobile device 150 may be configured to provide the occupant 102 with a direction of travel of the vehicle 110 and/or the occupant 102. In some embodiments, the mobile device 150 is configured via hardware, software, firmware, and/or a combination thereof, to perform data intake of one or more types of data, such as head motion data, eye motion data, device motion data, vehicle related device display data, and/or the like.

Additionally, or alternatively, in some embodiments, the mobile device 150 is configured via hardware, software, firmware, and/or a combination thereof, to generate and/or transmit command(s) that control, adjust, or otherwise impact operations of one or more of the vehicle 110, the mobile device 150, the onboard vehicle device 130, and/or the wearable device 140. For example, the mobile device 150 may be configured to generate a stabilized vehicle related interface component. Additionally, or alternatively, in some embodiments, the mobile device 150 is configured via hardware, software, firmware, and/or a combination thereof, to perform data reporting, provide data, and/or other data output process(es) associated with monitoring or otherwise analyzing operations of one or more of the vehicle 110, the mobile device 150, the onboard vehicle device 130, and/or the wearable device 140. For example, in various embodiments, the mobile device 150 may be configured to execute and/or perform one or more operations and/or functions described herein.

In some embodiments, the mobile device 150 includes a mobile device sensing component 160C. In some embodiments, the mobile device sensing component 160C is disposed within the mobile device 150. In some embodiments, the mobile device sensing component 160C is configured to capture data associated with the mobile device 150. In some embodiments, the mobile device sensing component 160C is configured to capture device motion data associated with the mobile device 150. In this regard, for example, the mobile device sensing component 160C includes at least one lidar component configured to capture device motion data and/or other data associated with the mobile device 150. As another example, the mobile device sensing component 160C includes at least one inertial measurement unit configured to capture device motion data and/or other data associated with the mobile device 150. As another example, the mobile device sensing component 160C includes at least one accelerometer configured to capture device motion data and/or other data associated with the mobile device 150. As another example, the mobile device sensing component 160C includes at least one gyroscope configured to capture device motion data and/or other data associated with the mobile device 150. As another example, the mobile device sensing component 160C includes at least one radar component (e.g., a millimeter wave-based radar component) configured to capture device motion data and/or other data associated with the mobile device 150. As another example, the mobile device sensing component 160C includes at least one global positioning system (GPS) component configured to capture device motion data and/or other data associated with the mobile device 150. As another example, the mobile device sensing component 160C includes at least one camera configured to capture device motion data and/or other data associated with the mobile device 150.

Additionally, while FIG. 1 illustrates certain components as separate, standalone entities, various embodiments are not limited to this configuration. In other embodiments, one or more components may be directly connected and/or share hardware or the like.

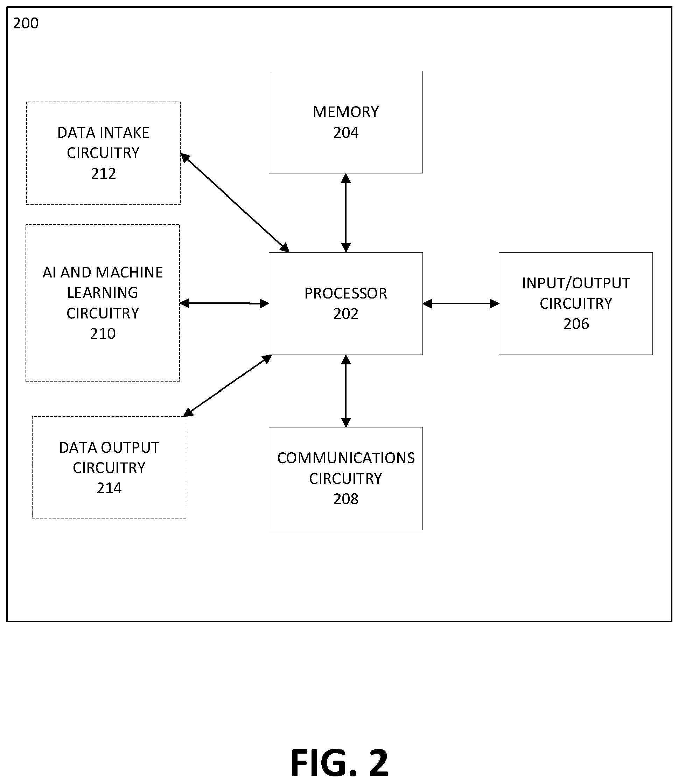

FIG. 2 illustrates an example block diagram of an example apparatus that may be specially configured in accordance with an example embodiment of the present disclosure. Specifically, FIG. 2 depicts an example computing apparatus 200 ("apparatus 200") specially configured in accordance with at least some example embodiments of the present disclosure. For example, the computing apparatus 200 may be embodied as one or more of a specifically configured personal computing apparatus, a specifically configured cloud-based computing apparatus, a specifically configured embedded computing device (e.g., configured for edge computing, and/or the like). Examples of an apparatus 200 may include, but is not limited to, the mobile device 150, the onboard vehicle device 130, and/or the wearable device 140. The apparatus 200 includes processor 202, memory 204, input/output circuitry 206, communications circuitry 208, and/or optional artificial intelligence ("AI") and machine learning circuitry 210. In some embodiments, the apparatus 200 is configured to execute and perform the operations described herein.

Although components are described with respect to functional limitations, it should be understood that the particular implementations necessarily include the use of particular computing hardware. It should also be understood that in some embodiments certain of the components described herein include similar or common hardware. For example, in some embodiments two sets of circuitry both leverage use of the same processor(s), memory(ies), circuitry(ies), and/or the like to perform their associated functions such that duplicate hardware is not required for each set of circuitry.

In various embodiments, such as computing apparatus 200 of the mobile device 150, the onboard vehicle device 130, and/or the wearable device 140 may refer to, for example, one or more computers, computing entities, desktop computers, mobile phones, tablets, phablets, notebooks, laptops, distributed systems, servers, or the like, and/or any combination of devices or entities adapted to perform the functions, operations, and/or processes described herein. Such functions, operations, and/or processes may include, for example, transmitting, receiving, operating on, processing, displaying, storing, determining, creating/generating, monitoring, evaluating, comparing, and/or similar terms used herein. In one embodiment, these functions, operations, and/or processes can be performed on data, content, information, and/or similar terms used herein. In this regard, the apparatus 200 embodies a particular, specially configured computing entity transformed to enable the specific operations described herein and provide the specific advantages associated therewith, as described herein.

Processor 202 or processor circuity 202 may be embodied in a number of different ways. In various embodiments, the use of the terms "processor" should be understood to include a single core processor, a multi-core processor, multiple processors internal to the apparatus 200, and/or one or more remote or "cloud" processor(s) external to the apparatus 200. In some example embodiments, processor 202 may include one or more processing devices configured to perform independently. Alternatively, or additionally, processor 202 may include one or more processor(s) configured in tandem via a bus to enable independent execution of operations, instructions, pipelining, and/or multithreading.

In an example embodiment, the processor 202 may be configured to execute instructions stored in the memory 204 or otherwise accessible to the processor. Alternatively, or additionally, the processor 202 may be configured to execute hard-coded functionality. As such, whether configured by hardware or software methods, or by a combination thereof, processor 202 may represent an entity (e.g., physically embodied in circuitry) capable of performing operations according to embodiments of the present disclosure while configured accordingly. Alternatively, or additionally, processor 202 may be embodied as an executor of software instructions, and the instructions may specifically configure the processor 202 to perform the various algorithms embodied in one or more operations described herein when such instructions are executed. In some embodiments, the processor 202 includes hardware, software, firmware, and/or a combination thereof that performs one or more operations described herein.

In some embodiments, the processor 202 (and/or co-processor or any other processing circuitry assisting or otherwise associated with the processor) is/are in communication with the memory 204 via a bus for passing information among components of the apparatus 200.

Memory 204 or memory circuitry 204 may be non-transitory and may include, for example, one or more volatile and/or non-volatile memories. In some embodiments, the memory 204 includes or embodies an electronic storage device (e.g., a computer readable storage medium). In some embodiments, the memory 204 is configured to store information, data, content, applications, instructions, or the like, for enabling an apparatus 200 to carry out various operations and/or functions in accordance with example embodiments of the present disclosure.

Input/output circuitry 206 may be included in the apparatus 200. In some embodiments, input/output circuitry 206 may provide output to the user and/or receive input from a user. The input/output circuitry 206 may be in communication with the processor 202 to provide such functionality. The input/output circuitry 206 may comprise one or more user interface(s). In some embodiments, a user interface may include a display that comprises the interface(s) rendered as a web user interface, an application user interface, a user device, a backend system, or the like. In some embodiments, the input/output circuitry 206 also includes a keyboard, a mouse, a joystick, a touch screen, touch areas, soft keys a microphone, a speaker, or other input/output mechanisms. The processor 202 and/or input/output circuitry 206 comprising the processor may be configured to control one or more operations and/or functions of one or more user interface elements through computer program instructions (e.g., software and/or firmware) stored on a memory accessible to the processor (e.g., memory 204, and/or the like). In some embodiments, the input/output circuitry 206 includes or utilizes a user-facing application to provide input/output functionality to a computing device and/or other display associated with a user.

Communications circuitry 208 may be included in the apparatus 200. The communications circuitry 208 may include any means such as a device or circuitry embodied in either hardware or a combination of hardware and software that is configured to receive and/or transmit data from/to a network and/or any other device, circuitry, or module in communication with the apparatus 200. In some embodiments the communications circuitry 208 includes, for example, a network interface for enabling communications with a wired or wireless communications network. Additionally, or alternatively, the communications circuitry 208 may include one or more network interface card(s), antenna(s), bus(es), switch(es), router(s), modem(s), and supporting hardware, firmware, and/or software, or any other device suitable for enabling communications via one or more communications network(s). In some embodiments, the communications circuitry 208 may include circuitry for interacting with an antenna(s) and/or other hardware or software to cause transmission of signals via the antenna(s) and/or to handle receipt of signals received via the antenna(s). In some embodiments, the communications circuitry 208 enables transmission to and/or receipt of data from a user device, one or more sensors, and/or other external computing device(s) in communication with the apparatus 200.

Data intake circuitry 212 may be included in the apparatus 200. The data intake circuitry 212 may include hardware, software, firmware, and/or a combination thereof, designed and/or configured to capture, receive, request, and/or otherwise gather data associated with operations of the vehicle 110. In some embodiments, the data intake circuitry 212 includes hardware, software, firmware, and/or a combination thereof, that communicates with one or more sensor(s) component(s), and/or the like within the vehicle 110 to receive particular data associated with such operations of the vehicle 110. Additionally, or alternatively, in some embodiments, the data intake circuitry 212 includes hardware, software, firmware, and/or a combination thereof, that retrieves particular data associated with the vehicle 110 from one or more data repository/repositories accessible to the apparatus 200.

AI and machine learning circuitry 210 may be included in the apparatus 200. The AI and machine learning circuitry 210 may include hardware, software, firmware, and/or a combination thereof designed and/or configured to request, receive, process, generate, and transmit data, data structures, control signals, and electronic information for training and executing a trained AI and machine learning model configured for facilitating the operations and/or functionalities described herein. For example, in some embodiments the AI and machine learning circuitry 210 includes hardware, software, firmware, and/or a combination thereof, that identifies training data and/or utilizes such training data for training a particular machine learning model, AI, and/or other model to generate particular output data based at least in part on learnings from the training data. Additionally, or alternatively, in some embodiments, the AI and machine learning circuitry 210 includes hardware, software, firmware, and/or a combination thereof, that embodies or retrieves a trained machine learning model, AI and/or other specially configured model utilized to process inputted data. Additionally, or alternatively, in some embodiments, the AI and machine learning circuitry 210 includes hardware, software, firmware, and/or a combination thereof that processes received data utilizing one or more algorithm(s), function(s), subroutine(s), and/or the like, in one or more pre-processing and/or subsequent operations that need not utilize a machine learning or AI model.

Data output circuitry 214 may be included in the apparatus 200. The data output circuitry 214 may include hardware, software, firmware, and/or a combination thereof, that configures and/or generates an output based at least in part on data processed by the apparatus 200. In some embodiments, the data output circuitry 214 includes hardware, software, firmware, and/or a combination thereof, that generates a particular report based at least in part on the processed data, for example where the report is generated based at least in part on a particular reporting protocol. Additionally, or alternatively, in some embodiments, the data output circuitry 214 includes hardware, software, firmware, and/or a combination thereof, that configures a particular output data object, output data file, and/or user interface for storing, transmitting, and/or displaying. For example, in some embodiments, the data output circuitry 214 generates and/or specially configures a particular data output for transmission to another system sub-system for further processing. Additionally, or alternatively, in some embodiments, the data output circuitry 214 includes hardware, software, firmware, and/or a combination thereof, that causes rendering of a specially configured user interface based at least in part on data received by and/or processing by the apparatus 200.

In some embodiments, two or more of the sets of circuitries 202-214 are combinable. Alternatively, or additionally, one or more of the sets of circuitry 202-214 perform some or all of the operations and/or functionality described herein as being associated with another circuitry. In some embodiments, two or more of the sets of circuitry 202-214 are combined into a single module embodied in hardware, software, firmware, and/or a combination thereof. For example, in some embodiments, one or more of the sets of circuitry, for example the AI and machine learning circuitry 210, may be combined with the processor 202, such that the processor 202 performs one or more of the operations described herein with respect to the AI and machine learning circuitry 210.

In some embodiments, the onboard vehicle device 130 and/or the mobile device 150 is configured to identify vehicle related device display data. In some embodiments, the vehicle related device display data includes one or more items of data representative and/or indicative of one or more vehicle related device display items 304. In some embodiments, a vehicle related device display item is an item that is configured to be displayed on an interface component to convey and/or indicate information. For example, a vehicle related device display item may include images (e.g., still images), videos, synthetic images, virtual reality images, extended reality images, augmented reality images, and/or the like. In this regard, in some embodiments, a vehicle related device display item is a display item that is indicative of a speed associated with the vehicle 110. For example, a vehicle related device display item may be a display item that indicates a speed at which the vehicle 110 is moving. In some embodiments, a vehicle related device display item is a display item that is indicative of a fuel quantity associated with the vehicle 110. For example, a vehicle related device display item may be a display item that indicates an amount of fuel in the vehicle 110. In some embodiments, a vehicle related device display item is a display item that is indicative of engine parameters associated with the vehicle 110. For example, a vehicle related device display item may be a display item that indicates an engine temperature of an engine of the vehicle 110.

In some embodiments, a vehicle related device display item is a display item that is indicative of navigation maps associated with the vehicle 110. For example, a vehicle related device display item may be a display item that indicates a map of the area surrounding the vehicle 110. As another example, a vehicle related device display item may be a display item that indicates a flight path of the vehicle 110 (e.g., when the vehicle 110 is an aircraft). In some embodiments, a vehicle related device display item is a display item that is indicative of audio controls associated with the vehicle 110. For example, a vehicle related device display item may be a display item that may be used to adjust an audio volume in the vehicle 110. In some embodiments, a vehicle related device display item is a display item that is indicative of display controls associated with the vehicle 110. For example, a vehicle related device display item may be a display item that may be used to adjust a brightness of an interface component in the vehicle 110.

In some embodiments, a vehicle related device display item is a display item that is indicative of videos associated with the occupant 102 of the vehicle 110. For example, a vehicle related device display item may be a display item that conveys a video watched by the occupant 102 of the vehicle 110. In some embodiments, a vehicle related device display item is a display item that is indicative of internet information associated with the occupant 102 of the vehicle 110. For example, a vehicle related device display item may be a display item that indicates whether onboard vehicle device 130 and/or the mobile device 150 is connected to the internet. In some embodiments, a vehicle related device display item is a display item that is indicative of documents associated with the occupant 102 of the vehicle 110. For example, a vehicle related device display item may be a display item that conveys a document viewed by the occupant 102 of the vehicle 110. In some embodiments, a vehicle related device display item is a display item that is indicative of communications associated with the occupant 102 of the vehicle 110. For example, a vehicle related device display item may be a display item that conveys text messages viewed by the occupant 102 of the vehicle 110.

Additionally, or alternatively, vehicle related device display data includes one or more items of data representative and/or indicative of one or more touch zones 306. For example, a touch zone in the one or more touch zones 306 may be configured to be used to select the one or more of the one or more vehicle related device display items 304. In this regard, for example, the one or more touch zones 306 may be configured to control the vehicle 110, the onboard vehicle device 130, and/or the mobile device 150.

In some embodiments, the onboard vehicle device 130 and/or the mobile device 150 is configured to generate a vehicle related interface component 302. In some embodiments, the vehicle related interface component 302 is generated based on vehicle related device display data. In this regard, in some embodiments, the vehicle related interface component 302 includes at least one of the one or more vehicle related device display items 304. In some embodiments, each of the one or more vehicle related device display items 304 is associated with an original display item position on the vehicle related interface component 302. In this regard, for example, an original display item position may be a position on the vehicle related interface component 302 at which a vehicle related device display item is displayed and/or located on the vehicle related interface component 302.

In some embodiments, the vehicle related interface component 302 includes one or more touch zones 306. In some embodiments, the one or more touch zones 306 are selectable portions of the vehicle related interface component 302. For example, the one or more touch zones 306 may be selectable to display information about a vehicle related device display item of the one or more vehicle related device display items 304. In some embodiments, the one or more touch zones 306 are associated with an original touch zone position on the vehicle related interface component 302. In this regard, for example, an original touch zone position may be a position on the vehicle related interface component 302 at which a touch zone in the one or more touch zones 306 is displayed and/or located on the vehicle related interface component 302 (e.g., touching an original touch zone position may select a touch zone).

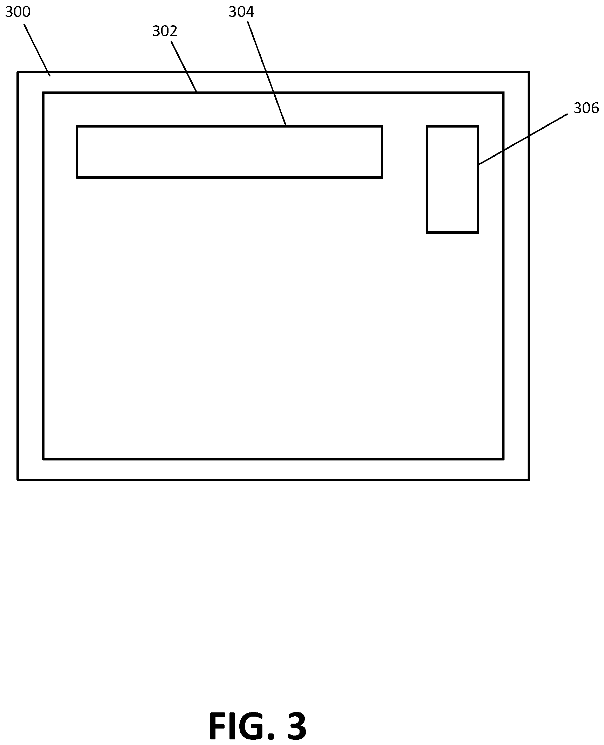

In some embodiments, the onboard vehicle device 130 and/or the mobile device 150 is configured to cause the vehicle related interface component 302 to be rendered to an interface 300, such as illustrated in FIG. 3. In some embodiments, the vehicle related interface component 302 is caused to be rendered to the interface 300 of a device. In some embodiments, the vehicle related interface component 302 is caused to be rendered to the interface 300 of the onboard vehicle device 130. In this regard, for example, when the vehicle related interface component 302 is rendered to the interface 300 of the onboard vehicle device 130, the vehicle related interface component 302 may include a vehicle related device display item that is indicative of a fuel quantity associated with the vehicle 110. In some embodiments, the vehicle related interface component 302 is caused to be rendered to the interface 300 of the mobile device 150. In this regard, for example, when the vehicle related interface component 302 is rendered to the interface 300 of the mobile device 150, the vehicle related interface component 302 may include a vehicle related device display item that is indicative of communications associated with the occupant 102 of the vehicle 110.

In some embodiments, the onboard vehicle device 130 and/or the mobile device 150 is configured to receive head motion data. In some embodiments, head motion data includes one or more items of data representative and/or indicative of motion of a head 120 of the occupant 102. In this regard, in some embodiments, head motion data includes one or more items of data representative and/or indicative of acceleration motion (e.g., motion in an X, Y, and/or Z axis) of the head 120 of the occupant 102. Additionally, or alternatively, head motion data includes one or more items of data representative and/or indicative of angular motion (e.g., azimuth, elevation, and/or roll motion) of the head 120 of the occupant 102.

In some embodiments, head motion data is received by the onboard vehicle device 130 and/or the mobile device 150 in response to an occupant instability action. In some embodiments, an occupant instability action is an action by the occupant 102 of the vehicle 110 that causes acceleration motion (e.g., motion in an X, Y, and/or Z axis) and/or angular motion (e.g., azimuth, elevation, and/or roll motion) of the occupant 102 (e.g., the head 120 of the occupant 102), and/or the mobile device 150. For example, an occupant instability action may be an action by the occupant 102 that includes causing acceleration motion and/or angular motion of the head 120 of the occupant 102 (e.g., rotating the head 120 to look at something). As another example, an occupant instability action may be an action by the occupant 102 that includes causing acceleration motion and/or angular motion of the mobile device 150 (e.g., moving the mobile device 150 while using it).

Additionally, or alternatively, head motion data is received by the onboard vehicle device 130 in response to a vehicle instability event. In some embodiments, a vehicle instability event is an event in which motion of the vehicle 110 causes acceleration motion (e.g., motion in an X, Y, and/or Z axis) and/or angular motion (e.g., azimuth, elevation, and/or roll motion) of the vehicle 110, the occupant 102 (e.g., the head 120 of the occupant 102), the onboard vehicle device 130, and/or the mobile device 150. For example, a vehicle instability event may be an event that includes driving over a road that causes acceleration motion and/or angular motion of the vehicle 110, the occupant 102 (e.g., the head 120 of the occupant 102), the onboard vehicle device 130, and/or the mobile device 150 (e.g., driving over a bumpy road, etc.).

In some embodiments, the onboard vehicle device 130 and/or the mobile device 150 is configured to receive head motion data from the wearable device 140. In this regard, in some embodiments, the wearable device 140 is configured to capture head motion data using the wearable device sensing component 160A. For example, the onboard vehicle device 130 and/or the mobile device 150 may be configured to receive head motion data from the wearable device 140 that captured the head motion data using an inertial measurement unit included in the wearable device sensing component 160A. In this regard, in some embodiments, the onboard vehicle device 130 and/or the mobile device 150 is configured to correct for any drift associated with an inertial measurement unit included in the wearable device sensing component 160A. In some embodiments, the onboard vehicle device 130 and/or the mobile device 150 is configured to receive head motion data from the wearable device 140 when the wearable device 140 is in contact with the occupant 102. In some embodiments, the onboard vehicle device 130 and/or the mobile device 150 is configured to receive head motion data from the wearable device 140 when the wearable device 140 is in contact with the head 120 of the occupant 102. In some embodiments, the onboard vehicle device 130 and/or the mobile device 150 is configured to receive head motion data from the wearable device 140 when the vehicle 110 is in motion (e.g., when the vehicle 110 is travelling from a first location to a second location).

In some embodiments, the onboard vehicle device 130 and/or the mobile device 150 is configured to generate eye motion data. In some embodiments, eye motion data includes one or more items of data representative and/or indicative of motion of an eye gaze of the occupant 102. In this regard, in some embodiments, eye motion data includes one or more items of data representative and/or indicative of acceleration motion (e.g., motion in an X, Y, and/or Z axis) of an eye gaze of the occupant 102. In some embodiments, acceleration motion (e.g., motion in an X, Y, and/or Z axis) of an eye gaze of the occupant 102 is caused by an occupant instability action and/or a vehicle instability event. Additionally, or alternatively, eye motion data includes one or more items of data representative and/or indicative of angular motion (e.g., azimuth, elevation, and/or roll motion) of an eye gaze of the occupant 102. In some embodiments, angular motion (e.g., azimuth, elevation, and/or roll motion) of an eye gaze of the occupant 102 is caused by an occupant instability action and/or a vehicle instability event.

In some embodiments, eye motion data is generated by applying head motion data to an eye motion determination model. In some embodiments, an eye motion determination model is a data entity that describes parameters, hyper-parameters, and/or defined operations of a rules-based and/or machine learning model that is configured to generate eye motion data. In this regard, in some embodiments, the eye motion determination model is configured to utilize one or more of any type of machine learning, rules-based, and/or artificial intelligence techniques including one or more of computer vision techniques, supervised learning (e.g., using user feedback), unsupervised learning, semi-supervised learning, reinforcement learning, computer vision techniques, sequence modeling techniques, language processing techniques, neural network techniques, generative artificial intelligence techniques, filtration techniques, grouping techniques, sorting techniques, trend techniques, correlation techniques, anomaly detection techniques, clustering techniques, and/or the like. In some embodiments, the eye motion determination model includes a vestibulo-ocular reflex model. In this regard, in some embodiments, the eye motion determination model is configured to determine acceleration motion (e.g., motion in an X, Y, and/or Z axis) and/or angular motion (e.g., azimuth, elevation, and/or roll motion) of an eye gaze of the occupant 102.

In some embodiments, the onboard vehicle device 130 and/or the mobile device 150 is configured to detect device motion data. In some embodiments, device motion data includes one or more items of data representative and/or indicative of motion of the onboard vehicle device 130. In this regard, in some embodiments, device motion data includes one or more items of data representative and/or indicative of acceleration motion (e.g., motion in an X, Y, and/or Z axis) of the onboard vehicle device 130. In some embodiments, acceleration motion (e.g., motion in an X, Y, and/or Z axis) of the onboard vehicle device 130 is caused by a vehicle instability event. Additionally, or alternatively, eye motion data includes one or more items of data representative and/or indicative of angular motion (e.g., azimuth, elevation, and/or roll motion) of the onboard vehicle device 130. In some embodiments, angular motion (e.g., azimuth, elevation, and/or roll motion) of the onboard vehicle device 130 is caused by a vehicle instability event. In some embodiments, the onboard vehicle device 130 and/or the mobile device 150 is configured to detect device motion data using the onboard vehicle device sensing component 160B.

Additionally, or alternatively, device motion data includes one or more items of data representative and/or indicative of motion of the mobile device 150. In this regard, in some embodiments, device motion data includes one or more items of data representative and/or indicative of acceleration motion (e.g., motion in an X, Y, and/or Z axis) of the mobile device 150. In some embodiments, acceleration motion (e.g., motion in an X, Y, and/or Z axis) of the mobile device 150 is caused by an occupant instability action and/or a vehicle instability event. Additionally, or alternatively, eye motion data includes one or more items of data representative and/or indicative of angular motion (e.g., azimuth, elevation, and/or roll motion) of the mobile device 150. In some embodiments, angular motion (e.g., azimuth, elevation, and/or roll motion) of the mobile device 150 is caused by an occupant instability action and/or a vehicle instability event. In some embodiments, the onboard vehicle device 130 and/or the mobile device 150 is configured to detect device motion data using the mobile device sensing component 160C.

In some embodiments, the onboard vehicle device 130 and/or the mobile device 150 is configured to generate vehicle related stabilization data. In some embodiments, the vehicle related stabilization data includes one or more items of data representative and/or indicative of an estimated position change of an eye gaze of the occupant 102 of the vehicle 110 due to an occupant instability action and/or a vehicle instability event. Additionally, or alternatively, vehicle related stabilization data includes one or more items of data representative and/or indicative of an estimated position change of the onboard vehicle device 130 and/or the mobile device 150 due to an occupant instability action and/or a vehicle instability event.

In some embodiments, the onboard vehicle device 130 and/or the mobile device 150 is configured to generate vehicle related stabilization data by applying eye motion data and/or the device motion data to a vehicle related stabilization model. In some embodiments, a vehicle related stabilization model is a data entity that describes parameters, hyper-parameters, and/or defined operations of a rules-based and/or machine learning model that is configured to generate vehicle related stabilization data. In this regard, in some embodiments, the vehicle related stabilization model is configured to utilize one or more of any type of machine learning, rules-based, and/or artificial intelligence techniques including one or more of computer vision techniques, supervised learning (e.g., using user feedback), unsupervised learning, semi-supervised learning, reinforcement learning, computer vision techniques, sequence modeling techniques, language processing techniques, neural network techniques, generative artificial intelligence techniques, filtration techniques, grouping techniques, sorting techniques, trend techniques, correlation techniques, anomaly detection techniques, clustering techniques, and/or the like. In this regard, in some embodiments, the vehicle related stabilization model is configured to determine an estimated position change of an eye gaze of the occupant 102 of the vehicle 110 due to an occupant instability action and/or a vehicle instability event by using eye motion data and/or the device motion data. Additionally, or alternatively, the vehicle related stabilization model is configured to determine an estimated position change of the onboard vehicle device 130 and/or the mobile device 150 due to an occupant instability action and/or a vehicle instability event by using eye motion data and/or the device motion data.

In some embodiments, the onboard vehicle device 130 and/or the mobile device 150 is configured to generate a stabilized vehicle related interface component 400. In some embodiments, the stabilized vehicle related interface component 400 is configured to be generated based on vehicle related stabilization data and/or vehicle related device display data. In this regard, in some embodiments, the stabilized vehicle related interface component 400 includes one or more stabilized vehicle related device display items 404 that correspond to the one or more vehicle related device display items 304. For example, the stabilized vehicle related interface component 400 may include one or more stabilized vehicle related device display items 404 that are indicative of a speed associated with the vehicle 110. As another example, the stabilized vehicle related interface component 400 may include one or more stabilized vehicle related device display items 404 that are indicative of fuel quantity associated with the vehicle 110. As another example, the stabilized vehicle related interface component 400 may include one or more stabilized vehicle related device display items 404 that are indicative of engine parameters associated with the vehicle 110.

As another example, the stabilized vehicle related interface component 400 may include one or more stabilized vehicle related device display items 404 that are indicative of navigation maps associated with the vehicle 110. As another example, the stabilized vehicle related interface component 400 may include one or more stabilized vehicle related device display items 404 that are indicative of audio controls associated with the vehicle 110. As another example, the stabilized vehicle related interface component 400 may include one or more stabilized vehicle related device display items 404 that are indicative of display controls associated with the vehicle 110. As another example, the stabilized vehicle related interface component 400 may include one or more stabilized vehicle related device display items 404 that are indicative of videos associated with the occupant 102 of the vehicle 110. As another example, the stabilized vehicle related interface component 400 may include one or more stabilized vehicle related device display items 404 that are indicative of internet information associated with the occupant 102 of the vehicle 110. As another example, the stabilized vehicle related interface component 400 may include one or more stabilized vehicle related device display items 404 that are indicative of documents associated with the occupant 102 of the vehicle 110. As another example, the stabilized vehicle related interface component 400 may include one or more stabilized vehicle related device display items 404 that are indicative of communications associated with the occupant 102 of the vehicle 110.

In some embodiments, each of the one or more stabilized vehicle related device display items 404 is associated with a stabilized display item position on the stabilized vehicle related interface component 400. In this regard, for example, a stabilized display item position may be a position on the stabilized vehicle related interface component 400 at which a stabilized vehicle related device display item is displayed and/or located on the stabilized vehicle related interface component 400. In some embodiments, a stabilized display item position may be a different position than an original display item position. Said differently, in some embodiments, the stabilized vehicle related interface component 400 is configured such that an estimated position change of an eye gaze of the occupant 102 of the vehicle 110 and/or an estimated position change of the onboard vehicle device 130 and/or the mobile device 150 due to an occupant instability action and/or a vehicle instability event is accounted for when displaying display items.

In some embodiments, the stabilized vehicle related interface component 400 includes one or more remapped touch zones 406. In this regard, in some embodiments, the onboard vehicle device 130 and/or the mobile device 150 is configured to remap the one or more touch zones 306 based on the eye motion data and/or the device motion data. In some embodiments, the one or more remapped touch zones 406 are selectable portions of the stabilized vehicle related interface component 400. For example, the one or more remapped touch zones 406 may be selectable to display information about a stabilized vehicle related device display item of the one or more stabilized vehicle related device display items 404.

In some embodiments, the one or more remapped touch zones 406 are associated with a remapped touch zone position on the stabilized vehicle related interface component 400. In this regard, for example, a remapped touch zone position may be a position on the stabilized vehicle related interface component 400 at which a remapped touch zone in the one or more remapped touch zones 406 is displayed and/or located on the stabilized vehicle related interface component 400 (e.g., touching a remapped touch zone position may select a remapped touch zone). Said differently, for example, the one or more remapped touch zones 406 may correspond to the one or more touch zones 306 but located at a different position to account for an occupant instability action and/or a vehicle instability event.

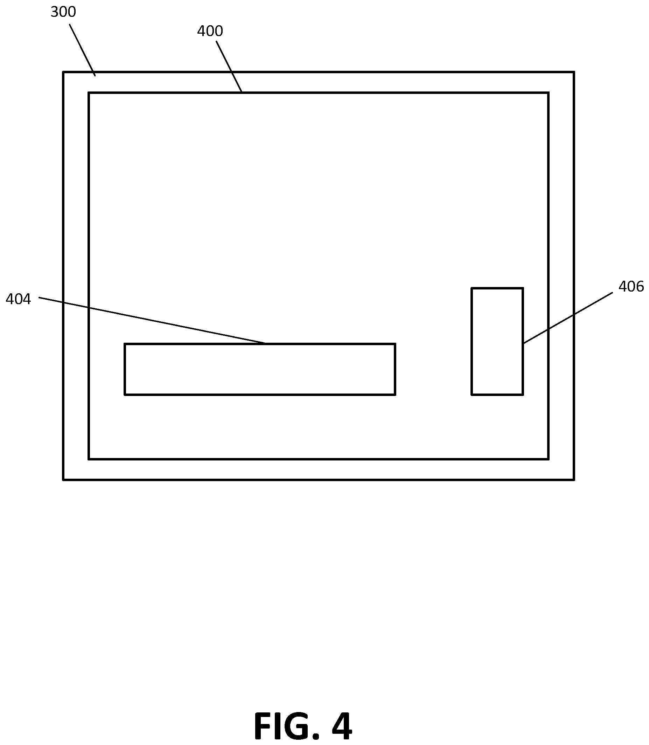

In some embodiments, the onboard vehicle device 130 and/or the mobile device 150 is configured to cause the stabilized vehicle related interface component 400 to be rendered to the interface 300, such as illustrated in FIG. 4. In some embodiments, the stabilized vehicle related interface component 400 is caused to be rendered to the interface 300 of a device. In some embodiments, the stabilized vehicle related interface component 400 is caused to be rendered to the interface 300 of the onboard vehicle device 130. In this regard, for example, when the stabilized vehicle related interface component 400 is rendered to the interface 300 of the onboard vehicle device 130, the stabilized vehicle related interface component 400 may include a stabilized vehicle related device display item that is indicative of a fuel quantity associated with the vehicle 110. In some embodiments, the stabilized vehicle related interface component 400 is caused to be rendered to the interface 300 of the mobile device 150. In this regard, for example, when the stabilized vehicle related interface component 400 is rendered to the interface 300 of the mobile device 150, the stabilized vehicle related interface component 400 may include a stabilized vehicle related device display item that is indicative of communications associated with the occupant 102 of the vehicle 110.

### Example Methods

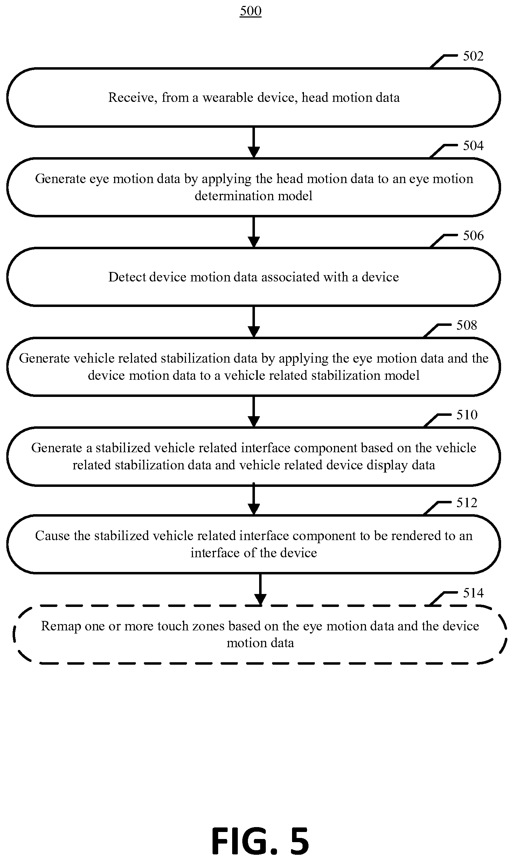

Referring now to FIG. 5, a flowchart providing an example method 500 is illustrated. In this regard, FIG. 5 illustrates operations that may be performed by the onboard vehicle device 130, the mobile device 150, and/or the wearable device 140. In some embodiments, the method 500 includes operations for generating a stabilized vehicle related interface component, as described above. In some embodiments, the example method 500 defines a computer-implemented process, which may be executable by any of the device(s) and/or system(s) embodied in hardware, software, firmware, and/or a combination thereof, as described herein. In some embodiments, computer program code including one or more computer-coded instructions are stored to at least one non-transitory computer-readable storage medium, such that execution of the computer program code initiates performance of the method 500.

As shown in block 502, the method 500 includes receiving, from a wearable device, head motion data. As described above, in some embodiments, head motion data includes one or more items of data representative and/or indicative of motion of a head of the occupant. In this regard, in some embodiments, head motion data includes one or more items of data representative and/or indicative of acceleration motion (e.g., motion in an X, Y, and/or Z axis) of the head of the occupant. Additionally, or alternatively, head motion data includes one or more items of data representative and/or indicative of angular motion (e.g., azimuth, elevation, and/or roll motion) of the head of the occupant.

In some embodiments, head motion data is received by the onboard vehicle device and/or the mobile device in response to an occupant instability action. In some embodiments, an occupant instability action is an action by the occupant of the vehicle that causes acceleration motion (e.g., motion in an X, Y, and/or Z axis) and/or angular motion (e.g., azimuth, elevation, and/or roll motion) of the occupant (e.g., the head of the occupant), and/or the mobile device. For example, an occupant instability action may be an action by the occupant that includes causing acceleration motion and/or angular motion of the head of the occupant (e.g., rotating the head to look at something). As another example, an occupant instability action may be an action by the occupant that includes causing acceleration motion and/or angular motion of the mobile device (e.g., moving the mobile device while using it).

Additionally, or alternatively, head motion data is received by the onboard vehicle device in response to a vehicle instability event. In some embodiments, a vehicle instability event is an event in which motion of the vehicle causes acceleration motion (e.g., motion in an X, Y, and/or Z axis) and/or angular motion (e.g., azimuth, elevation, and/or roll motion) of the vehicle, the occupant (e.g., the head of the occupant), the onboard vehicle device, and/or the mobile device. For example, a vehicle instability event may be an event that includes driving over a road that causes acceleration motion and/or angular motion of the vehicle, the occupant (e.g., the head of the occupant), the onboard vehicle device, and/or the mobile device (e.g., driving over a bumpy road, etc.).

In some embodiments, the onboard vehicle device and/or the mobile device is configured to receive head motion data from the wearable device. In this regard, in some embodiments, the wearable device is configured to capture head motion data using the wearable device sensing component. For example, the onboard vehicle device and/or the mobile device may be configured to receive head motion data from the wearable device that captured the head motion data using an inertial measurement unit included in the wearable device sensing component. In this regard, in some embodiments, the onboard vehicle device and/or the mobile device is configured to correct for any drift associated with an inertial measurement unit included in the wearable device sensing component. In some embodiments, the onboard vehicle device and/or the mobile device is configured to receive head motion data from the wearable device when the wearable device is in contact with the occupant. In some embodiments, the onboard vehicle device and/or the mobile device is configured to receive head motion data from the wearable device when the wearable device is in contact with the head of the occupant. In some embodiments, the onboard vehicle device and/or the mobile device is configured to receive head motion data from the wearable device when the vehicle is in motion (e.g., when the vehicle is travelling from a first location to a second location).

As shown in block 504, the method 500 includes generating eye motion data by applying the head motion data to an eye motion determination model. As described above, in some embodiments, eye motion data includes one or more items of data representative and/or indicative of motion of an eye gaze of the occupant. In this regard, in some embodiments, eye motion data includes one or more items of data representative and/or indicative of acceleration motion (e.g., motion in an X, Y, and/or Z axis) of an eye gaze of the occupant. In some embodiments, acceleration motion (e.g., motion in an X, Y, and/or Z axis) of an eye gaze of the occupant is caused by an occupant instability action and/or a vehicle instability event. Additionally, or alternatively, eye motion data includes one or more items of data representative and/or indicative of angular motion (e.g., azimuth, elevation, and/or roll motion) of an eye gaze of the occupant. In some embodiments, angular motion (e.g., azimuth, elevation, and/or roll motion) of an eye gaze of the occupant is caused by an occupant instability action and/or a vehicle instability event.

In some embodiments, eye motion data is generated by applying head motion data to an eye motion determination model. In some embodiments, an eye motion determination model is a data entity that describes parameters, hyper-parameters, and/or defined operations of a rules-based and/or machine learning model that is configured to generate eye motion data. In this regard, in some embodiments, the eye motion determination model is configured to utilize one or more of any type of machine learning, rules-based, and/or artificial intelligence techniques including one or more of computer vision techniques, supervised learning (e.g., using user feedback), unsupervised learning, semi-supervised learning, reinforcement learning, computer vision techniques, sequence modeling techniques, language processing techniques, neural network techniques, generative artificial intelligence techniques, filtration techniques, grouping techniques, sorting techniques, trend techniques, correlation techniques, anomaly detection techniques, clustering techniques, and/or the like. In some embodiments, the eye motion determination model includes a vestibulo-ocular reflex model. In this regard, in some embodiments, the eye motion determination model is configured to determine acceleration motion (e.g., motion in an X, Y, and/or Z axis) and/or angular motion (e.g., azimuth, elevation, and/or roll motion) of an eye gaze of the occupant.

As shown in block 506, the method 500 includes detecting device motion data associated with a device. As described above, in some embodiments, device motion data includes one or more items of data representative and/or indicative of motion of the onboard vehicle device. In this regard, in some embodiments, device motion data includes one or more items of data representative and/or indicative of acceleration motion (e.g., motion in an X, Y, and/or Z axis) of the onboard vehicle device. In some embodiments, acceleration motion (e.g., motion in an X, Y, and/or Z axis) of the onboard vehicle device is caused by a vehicle instability event. Additionally, or alternatively, eye motion data includes one or more items of data representative and/or indicative of angular motion (e.g., azimuth, elevation, and/or roll motion) of the onboard vehicle device. In some embodiments, angular motion (e.g., azimuth, elevation, and/or roll motion) of the onboard vehicle device is caused by a vehicle instability event. In some embodiments, the onboard vehicle device and/or the mobile device is configured to detect device motion data using the onboard vehicle device sensing component.

Additionally, or alternatively, device motion data includes one or more items of data representative and/or indicative of motion of the mobile device. In this regard, in some embodiments, device motion data includes one or more items of data representative and/or indicative of acceleration motion (e.g., motion in an X, Y, and/or Z axis) of the mobile device. In some embodiments, acceleration motion (e.g., motion in an X, Y, and/or Z axis) of the mobile device is caused by an occupant instability action and/or a vehicle instability event. Additionally, or alternatively, eye motion data includes one or more items of data representative and/or indicative of angular motion (e.g., azimuth, elevation, and/or roll motion) of the mobile device. In some embodiments, angular motion (e.g., azimuth, elevation, and/or roll motion) of the mobile device is caused by an occupant instability action and/or a vehicle instability event. In some embodiments, the onboard vehicle device and/or the mobile device is configured to detect device motion data using the mobile device sensing component.

As shown in block 508, the method 500 includes generating vehicle related stabilization data by applying the eye motion data and the device motion data to a vehicle related stabilization model. As described above, in some embodiments, the vehicle related stabilization data includes one or more items of data representative and/or indicative of an estimated position change of an eye gaze of the occupant of the vehicle due to an occupant instability action and/or a vehicle instability event. Additionally, or alternatively, vehicle related stabilization data includes one or more items of data representative and/or indicative of an estimated position change of the onboard vehicle device and/or the mobile device due to an occupant instability action and/or a vehicle instability event.

In some embodiments, the onboard vehicle device and/or the mobile device is configured to generate vehicle related stabilization data by applying eye motion data and/or the device motion data to a vehicle related stabilization model. In some embodiments, a vehicle related stabilization model is a data entity that describes parameters, hyper-parameters, and/or defined operations of a rules-based and/or machine learning model that is configured to generate vehicle related stabilization data. In this regard, in some embodiments, the vehicle related stabilization model is configured to utilize one or more of any type of machine learning, rules-based, and/or artificial intelligence techniques including one or more of computer vision techniques, supervised learning (e.g., using user feedback), unsupervised learning, semi-supervised learning, reinforcement learning, computer vision techniques, sequence modeling techniques, language processing techniques, neural network techniques, generative artificial intelligence techniques, filtration techniques, grouping techniques, sorting techniques, trend techniques, correlation techniques, anomaly detection techniques, clustering techniques, and/or the like. In this regard, in some embodiments, the vehicle related stabilization model is configured to determine an estimated position change of an eye gaze of the occupant of the vehicle due to an occupant instability action and/or a vehicle instability event by using eye motion data and/or the device motion data. Additionally, or alternatively, the vehicle related stabilization model is configured to determine an estimated position change of the onboard vehicle device and/or the mobile device due to an occupant instability action and/or a vehicle instability event by using eye motion data and/or the device motion data.

As shown in block 510, the method 500 includes generating a stabilized vehicle related interface component based on the vehicle related stabilization data and vehicle related device display data. As described above, in some embodiments, the stabilized vehicle related interface component is configured to be generated based on vehicle related stabilization data and/or vehicle related device display data. In this regard, in some embodiments, the stabilized vehicle related interface component, includes one or more stabilized vehicle related device display items that correspond to the one or more vehicle related device display items. For example, the stabilized vehicle related interface component may include one or more stabilized vehicle related device display items that is indicative of a speed associated with the vehicle. As another example, the stabilized vehicle related interface component may include one or more stabilized vehicle related device display items that is indicative of fuel quantity associated with the vehicle. As another example, the stabilized vehicle related interface component may include one or more stabilized vehicle related device display items that is indicative of engine parameters associated with the vehicle.

As another example, the stabilized vehicle related interface component may include one or more stabilized vehicle related device display items that is indicative of navigation maps associated with the vehicle. As another example, the stabilized vehicle related interface component may include one or more stabilized vehicle related device display items that is indicative of audio controls associated with the vehicle. As another example, the stabilized vehicle related interface component may include one or more stabilized vehicle related device display items that is indicative of display controls associated with the vehicle. As another example, the stabilized vehicle related interface component may include one or more stabilized vehicle related device display items that is indicative of videos associated with the occupant of the vehicle. As another example, the stabilized vehicle related interface component may include one or more stabilized vehicle related device display items that is indicative of internet information associated with the occupant of the vehicle. As another example, the stabilized vehicle related interface component may include one or more stabilized vehicle related device display items that is indicative of documents associated with the occupant of the vehicle. As another example, the stabilized vehicle related interface component may include one or more stabilized vehicle related device display items that is indicative of communications associated with the occupant of the vehicle.

In some embodiments, each of the one or more stabilized vehicle related device display items is associated with a stabilized display item position on the stabilized vehicle related interface component. In this regard, for example, a stabilized display item position may be a position on the stabilized vehicle related interface component at which a stabilized vehicle related device display item is displayed and/or located on the stabilized vehicle related interface component. In some embodiments, a stabilized display item position may be a different position than an original display item position. Said differently, in some embodiments, the stabilized vehicle related interface component is configured such that an estimated position change of an eye gaze of the occupant of the vehicle and/or an estimated position change of the onboard vehicle device and/or the mobile device due to an occupant instability action and/or a vehicle instability event is accounted for when displaying display items.

As shown in block 512, the method 500 includes causing the stabilized vehicle related interface component to be rendered to an interface of the device. As described above, in some embodiments, the one or more remapped touch zones are selectable portions of the stabilized vehicle related interface component. For example, the one or more remapped touch zones may be selectable to display information about a stabilized vehicle related device display item of the one or more stabilized vehicle related device display items. In some embodiments, the one or more remapped touch zones are associated with a remapped touch zone position on the stabilized vehicle related interface component. In this regard, for example, a remapped touch zone position may be a position on the stabilized vehicle related interface component at which a remapped touch zone in the one or more remapped touch zones is displayed and/or located on the stabilized vehicle related interface component (e.g., touching a remapped touch zone position may select a remapped touch zone). Said differently, for example, the one or more remapped touch zones may correspond to the one or more touch zones but located at a different position to account for an occupant instability action and/or a vehicle instability event.

As shown in optional block 514, the method 500 optionally includes remapping one or more touch zones based on the eye motion data and the device motion data. As described above, in some embodiments, the stabilized vehicle related interface component is caused to be rendered to the interface of a device. In some embodiments, the stabilized vehicle related interface component is caused to be rendered to the interface of the onboard vehicle device. In this regard, for example, when the stabilized vehicle related interface component is rendered to the interface of the onboard vehicle device, the stabilized vehicle related interface component may include a stabilized vehicle related device display item that is indicative of a fuel quantity associated with the vehicle. In some embodiments, the stabilized vehicle related interface component is caused to be rendered to the interface of the mobile device. In this regard, for example, when the stabilized vehicle related interface component is rendered to the interface of the mobile device, the stabilized vehicle related interface component may include a stabilized vehicle related device display item that is indicative of communications associated with the occupant of the vehicle.

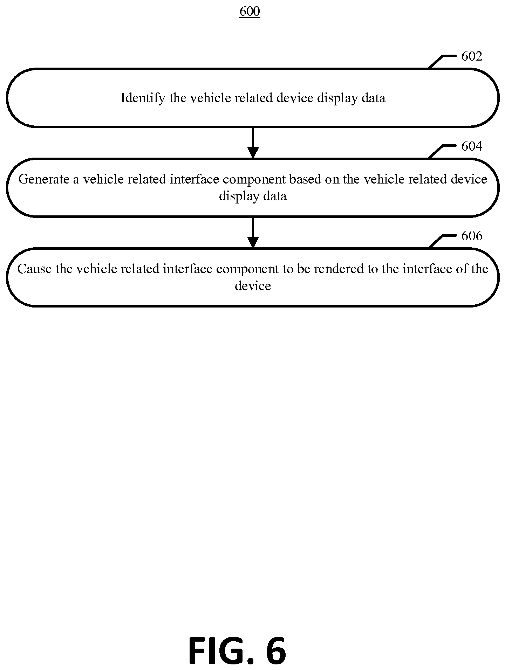

Referring now to FIG. 6, a flowchart providing an example method 600 is illustrated. In this regard, FIG. 6 illustrates operations that may be performed by the onboard vehicle device 130, the mobile device 150, and/or the wearable device 140. In some embodiments, the method 600 includes operations for generating a vehicle related interface component, as described above. In some embodiments, the example method 600 defines a computer-implemented process, which may be executable by any of the device(s) and/or system(s) embodied in hardware, software, firmware, and/or a combination thereof, as described herein. In some embodiments, computer program code including one or more computer-coded instructions are stored to at least one non-transitory computer-readable storage medium, such that execution of the computer program code initiates performance of the method 600.

As shown in block 602, the method 600 includes identifying the vehicle related device display data. As described above, in some embodiments, the vehicle related device display data includes one or more items of data representative and/or indicative of one or more vehicle related device display items. In some embodiments, a vehicle related device display item is an item that is configured to be displayed on an interface component to convey and/or indicate information. For example, a vehicle related device display item may include images (e.g., still images), videos, synthetic images, virtual reality images, extended reality images, augmented reality images, and/or the like. In this regard, in some embodiments, a vehicle related device display item is a display item that is indicative of a speed associated with the vehicle. For example, a vehicle related device display item may be a display item that indicates a speed at which the vehicle is moving. In some embodiments, a vehicle related device display item is a display item that is indicative of a fuel quantity associated with the vehicle. For example, a vehicle related device display item may be a display item that indicates an amount of fuel in the vehicle. In some embodiments, a vehicle related device display item is a display item that is indicative of engine parameters associated with the vehicle. For example, a vehicle related device display item may be a display item that indicates an engine temperature of an engine of the vehicle.

In some embodiments, a vehicle related device display item is a display item that is indicative of navigation maps associated with the vehicle. For example, a vehicle related device display item may be a display item that indicates a map of the area surrounding the vehicle. As another example, a vehicle related device display item may be a display item that indicates a flight path of the vehicle (e.g., when the vehicle is an aircraft). In some embodiments, a vehicle related device display item is a display item that is indicative of audio controls associated with the vehicle. For example, a vehicle related device display item may be a display item that may be used to adjust an audio volume in the vehicle. In some embodiments, a vehicle related device display item is a display item that is indicative of display controls associated with the vehicle. For example, a vehicle related device display item may be a display item that may be used to adjust a brightness of an interface component in the vehicle.

In some embodiments, a vehicle related device display item is a display item that is indicative of videos associated with the occupant of the vehicle. For example, a vehicle related device display item may be a display item that conveys a video watched by the occupant of the vehicle. In some embodiments, a vehicle related device display item is a display item that is indicative of internet information associated with the occupant of the vehicle. For example, a vehicle related device display item may be a display item that indicates whether onboard vehicle device and/or the mobile device is connected to the internet. In some embodiments, a vehicle related device display item is a display item that is indicative of documents associated with the occupant of the vehicle. For example, a vehicle related device display item may be a display item that conveys a document viewed by the occupant of the vehicle. In some embodiments, a vehicle related device display item is a display item that is indicative of communications associated with the occupant of the vehicle. For example, a vehicle related device display item may be a display item that conveys text messages viewed by the occupant of the vehicle.

Additionally, or alternatively, vehicle related device display data includes one or more items of data representative and/or indicative of one or more touch zones. For example, a touch zone in the one or more touch zones may be configured to be used to select the one or more of the one or more vehicle related device display items. In this regard, for example, the one or more touch zones may be configured to control the vehicle, the onboard vehicle device, and/or the mobile device.

As shown in block 604, the method 600 includes generating a vehicle related interface component based on the vehicle related device display data. As described above, in some embodiments, the vehicle related interface component is generated based on vehicle related device display data. In this regard, in some embodiments, the vehicle related interface component includes at least one of the one or more vehicle related device display items. In some embodiments, each of the one or more vehicle related device display items is associated with an original display item position on the vehicle related interface component. In this regard, for example, an original display item position may be a position on the vehicle related interface component at which a vehicle related device display item is displayed and/or located on the vehicle related interface component.

In some embodiments, the vehicle related interface component includes one or more touch zones. In some embodiments, the one or more touch zones are selectable portions of the vehicle related interface component. For example, the one or more touch zones may be selectable to display information about a vehicle related device display item of the one or more vehicle related device display items. In some embodiments, the one or more touch zones are associated with an original touch zone position on the vehicle related interface component. In this regard, for example, an original touch zone position may be a position on the vehicle related interface component at which a touch zone in the one or more touch zones is displayed and/or located on the vehicle related interface component (e.g., touching an original touch zone position may select a touch zone).

As shown in block 606, the method 600 includes causing the vehicle related interface component to be rendered to the interface of the device. As described above, in some embodiments, the vehicle related interface component is caused to be rendered to the interface of a device. In some embodiments, the vehicle related interface component is caused to be rendered to the interface of the onboard vehicle device. In this regard, for example, when the vehicle related interface component is rendered to the interface of the onboard vehicle device, the vehicle related interface component may include a vehicle related device display item that is indicative of a fuel quantity associated with the vehicle. In some embodiments, the vehicle related interface component is caused to be rendered to the interface of the mobile device. In this regard, for example, when the vehicle related interface component is rendered to the interface of the mobile device, the vehicle related interface component may include a vehicle related device display item that is indicative of communications associated with the occupant of the vehicle.

Operations and/or functions of the present disclosure have been described herein, such as in flowcharts. As will be appreciated, computer program instructions may be loaded onto a computer or other programmable apparatus (e.g., hardware) to produce a machine, such that the resulting computer or other programmable apparatus implements the operations and/or functions described in the flowchart blocks herein. These computer program instructions may also be stored in a computer-readable memory that may direct a computer, processor, or other programmable apparatus to operate and/or function in a particular manner, such that the instructions stored in the computer-readable memory produce an article of manufacture, the execution of which implements the operations and/or functions described in the flowchart blocks. The computer program instructions may also be loaded onto a computer, processor, or other programmable apparatus to cause a series of operations to be performed on the computer, processor, or other programmable apparatus to produce a computer-implemented process such that the instructions executed on the computer, processor, or other programmable apparatus provide operations for implementing the functions and/or operations specified in the flowchart blocks. The flowchart blocks support combinations of means for performing the specified operations and/or functions and combinations of operations and/or functions for performing the specified operations and/or functions. It will be understood that one or more blocks of the flowcharts, and combinations of blocks in the flowcharts, can be implemented by special purpose hardware-based computer systems which perform the specified operations and/or functions, or combinations of special purpose hardware with computer instructions.

While this specification contains many specific embodiments and implementation details, these should not be construed as limitations on the scope of any disclosures or of what may be claimed, but rather as descriptions of features specific to particular embodiments of particular disclosures. Certain features that are described herein in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

While operations and/or functions are illustrated in the drawings in a particular order, this should not be understood as requiring that such operations and/or functions be performed in the particular order shown or in sequential order, or that all illustrated operations be performed, to achieve desirable results. In certain circumstances, operations and/or functions in alternative ordering may be advantageous. In some cases, the actions recited in the claims may be performed in a different order and still achieve desirable results. Thus, while particular embodiments of the subject matter have been described, other embodiments are within the scope of the following claims.

Similarly, while operations are illustrated in the drawings in a particular order, this should not be understood as requiring that such operations be performed in the particular order shown or in sequential order, or that all illustrated operations be performed, to achieve desirable results. In certain circumstances, operations in alternative ordering may be advantageous. In some cases, the actions recited in the claims may be performed in a different order and still achieve desirable results.

## Claims

1. A method comprising:
receiving, from a wearable device, head motion data, wherein the wearable device is in contact with an occupant of a vehicle;
generating eye motion data by applying the head motion data to an eye motion determination model;
detecting device motion data associated with a device;
generating vehicle related stabilization data by applying the eye motion data and the device motion data to a vehicle related stabilization model;
generating a stabilized vehicle related interface component based on the vehicle related stabilization data and vehicle related device display data; and
causing the stabilized vehicle related interface component to be rendered to an interface of the device.

2. The method of claim 1, wherein the head motion data is received when the vehicle is in motion.

3. The method of claim 1, further comprising:
remapping one or more touch zones based on the eye motion data and the device motion data.

4. The method of claim 1, wherein the device is an onboard vehicle device.

5. The method of claim 4, wherein the onboard vehicle device is physically secured to the vehicle.

6. The method of claim 1, wherein the device is a mobile device.

7. The method of claim 1, wherein the wearable device is in contact with at least a portion of a head of the occupant.

8. The method of claim 1, wherein the wearable device is at least one of glasses, headphones, or a head mounted display.

9. The method of claim 1, further comprising:
identifying the vehicle related device display data;
generating a vehicle related interface component based on the vehicle related device display data; and
causing the vehicle related interface component to be rendered to the interface of the device.

10. The method of claim 1, wherein the head motion data is received from the wearable device in response to an occupant instability action or a vehicle instability event.

11. The method of claim 1, wherein the stabilized vehicle related interface component comprises one or more stabilized vehicle related device display items.

12. The method of claim 1, wherein the eye motion determination model comprises a vestibulo-ocular reflex model.

13. An apparatus comprising memory and one or more processors communicatively coupled to the memory, the one or more processors configured to:
receive, from a wearable device, head motion data, wherein the wearable device is in contact with an occupant of a vehicle;
generate eye motion data by applying the head motion data to an eye motion determination model;
detect device motion data associated with a device;
generate vehicle related stabilization data by applying the eye motion data and the device motion data to a vehicle related stabilization model;
generate a stabilized vehicle related interface component based on the vehicle related stabilization data and vehicle related device display data; and
cause the stabilized vehicle related interface component to be rendered to an interface of the device.

14. The apparatus of claim 13, wherein the head motion data is received when the vehicle is in motion.

15. A computer program product comprising at least one non-transitory computer-readable storage medium having computer program code stored thereon that, in execution with at least one processor, configures the computer program product for:
receiving, from a wearable device, head motion data, wherein the wearable device is in contact with an occupant of a vehicle;
generating eye motion data by applying the head motion data to an eye motion determination model;
detecting device motion data associated with a device;
generating vehicle related stabilization data by applying the eye motion data and the device motion data to a vehicle related stabilization model;
generating a stabilized vehicle related interface component based on the vehicle related stabilization data and vehicle related device display data; and
causing the stabilized vehicle related interface component to be rendered to an interface of the device.
